# EUROPÄISCHE PATENTSCHRIFT

(11) **EP 3 683 076 B1**
(45) Veröffentlichungstag und Bekanntmachung des Hinweises auf die Patenterteilung: **12.07.2023**
(21) Anmeldenummer: 20150641.7
(22) Anmeldetag: 08.01.2020
(51) Int. Cl.: B60J 5/06, B60J 7/10

(54) **NUTZFAHRZEUGAUFBAU UND NUTZFAHRZEUG MIT EINEM DERARTIGEN NUTZFAHRZEUGAUFBAU**
COMMERCIAL VEHICLE STRUCTURE AND COMMERCIAL VEHICLE WITH SUCH A STRUCTURE
CARROSSERIE DE VÉHICULE UTILITAIRE ET VÉHICULE UTILITAIRE DOTÉ D'UNE TELLE CARROSSERIE DE VÉHICULE UTILITAIRE

(30) Priorität: 16.01.2019 DE 102019101047
(43) Veröffentlichungstag der Anmeldung: 22.07.2020
(73) Patentinhaber: Kögel Trailer GmbH, 89349 Burtenbach (DE)
(72) Erfinder: BROLL, Tobias, 86381 Krumbach-Billenhausen, (DE); KALISCHKO, Thomas, 86470 Thannhausen (DE); OKUMUS, Harun, 89349 Burtenbach (DE)
(74) Vertreter: Meissner Bolte Partnerschaft mbB

(56) Entgegenhaltungen:
- WO-A1-2016/053217
- FixemerLogistics: "SCS Mega Hubdach (Fixemer Schulung)", , 26 April 2012 (2012-04-26), pages 1-5, XP054981750, Retrieved from the Internet: URL:https://www.youtube.com/watch?v=O_Cb0b i57xo [retrieved on 2021-04-30]

## Beschreibung

Die Erfindung betrifft einen Nutzfahrzeugaufbau für ein Nutzfahrzeug,

insbesondere für einen Planensattelauflieger, sowie ein Nutzfahrzeug mit einem derartigen Nutzfahrzeugaufbau. Ein Nutzfahrzeugaufbau gemäß dem Oberbegriff des Patentanspruchs 1 ist beispielsweise aus DE 10 2013 107 455 A1 bekannt.

Generell sind Nutzfahrzeugaufbauten mit einem höhenverstellbaren Dach bekannt, die zur Begrenzung des Laderaumes wenigstens eine Begrenzungsplane und einen Außenrahmen aufweisen, wobei der Außenrahmen fest mit dem Fahrgestell des Planensattelaufliegers verbunden ist. Derartige Begrenzungsplanen sind hinlänglich als Seitenplanen oder Dachplanen bekannt und dienen zur ordnungsgemäßen Ladungssicherung. Eine korrekte Ladungssicherung ist notwendig, damit das Transportgut unbeschädigt beim Warenempfänger ankommt und dass während des Transports niemand aufgrund einer herabfallenden Ladung zu Schaden kommt. Des Weiteren dienen Begrenzungsplanen dazu, die Ladung vor Witterungseinflüssen und Diebstahl zu schützen.

Die Begrenzungsplanen weisen im Bereich einer unteren Kante Ösen zur Durchführung von Krampen auf, durch die ein Zollseil geführt werden kann. Somit wird ein zollsicherer Transport von Gütern ermöglicht. Das Problem beim zollsicheren Transport ist, dass die Gesamthöhe der Begrenzungsplanen aufgrund der an der unteren Kante angeordneten Ösen unveränderlich festgelegt ist.

Um die Ladehöhe im Nutzfahrzeugaufbau vollständig ausnützen zu können, ist es oft gewünscht Nutzfahrzeugaufbauten mit einem höhenverstellbaren Dach zu versehen. Dabei wird beim Beladen des Nutzfahrzeugaufbaus die Höhe der Zugangsöffnung durch ein höhenverstellbares Dach vergrößert. Nach dem Beladen wird das Dach wieder abgesenkt, um die gesetzlich zulässige Gesamtaußenhöhe einzuhalten.

Die aus DE 10 2013 107 455 A1 bekannten Nutzfahrzeugaufbauten weisen zwar ein höhenverstellbares Dach sowie ein XL- und Zoll-Zertifikat auf, jedoch ist die Befestigung der Planenspanner zur Straffung der Begrenzungsplanen am Außenrahmen beschränkt. Derzeit besteht nicht die Möglichkeit zoll-fähige Nutzfahrzeugaufbauten zusammen mit einem höhenverstellbaren Dach und einer anderen Befestigungsart der Planenspanner zur XL-Fähigkeit anzubieten.

Ein weiterer Nutzfahrzeugaufbau ist aus WO 2016/053 217 A1 bekannt. Bei diesem Nutzfahrzeugaufbau wird das Absinken eines Faltenschlags einer Plane verhindert. Der Faltenschlag ist im Bereich einer Bordwand angeordnet wird durch Spannvorrichtungen an Ort und Stelle gehalten.

Die Konformität nach DIN EN 12642 Code XL (Ladungssicherungszertifikat) bezeichnet die Fähigkeit, eine Begrenzungsplane in jeder Position straff spannen zu können. Die Zoll-Fähigkeit wird dadurch erreicht, in dem ein Zollseil zum Verschließen des Nutzfahrzeugaufbaus durch Krampen geführt wird.

Die Erfindung liegt die Aufgabe zu Grunde, einen zoll-fähigen Nutzfahrzeugaufbau mit einem höhenverstellbaren Dach und einer anderen Befestigungsart der Planenspanner zur XL-Fähigkeit anzugeben. Ferner ist es Aufgabe der Erfindung, ein Nutzfahrzeug mit einem derartigen Nutzfahrzeugaufbau anzugeben.

Erfindungsgemäß wird diese Aufgabe im Hinblick auf den Nutzfahrzeugaufbau durch den Gegenstand des Anspruchs 1 und im Hinblick auf das Nutzfahrzeug durch den Gegenstand des Anspruchs 10 gelöst.

Konkret wird die Aufgabe durch einen Nutzfahrzeugaufbau für ein Nutzfahrzeug, insbesondere für einen Planensattelauflieger gelöst. Der Nutzfahrzeugaufbau umfasst eine Begrenzungsplane mit mehreren Ösen und mehreren Planenspannern zur vertikalen Spannung der Begrenzungsplane, ein Zollseil zum zollsicheren Verschließen der Begrenzungsplane sowie ein Befestigungsmittel zur Befestigung der Begrenzungsplane. Das Befestigungsmittel umfasst wenigstens eine Bordwand, die eine Einhakleiste zur Befestigung der Planenspanner und eine Verankerungsanordnung für das Zollseil aufweist. Die Begrenzungsplane weist wenigstens zwei Aussparungen auf, wobei die Aussparungen eine Gesamthöhe aufweisen, die einem Verstellweg des höhenverstellbaren Dachs entspricht.

Die Aussparungen weisen im Wesentlichen eine U-Förmige Kontur auf und sind regelmäßig zueinander angeordnet, wobei sich der Abstand der Aussparungen während der Höhenverstellung des Dachs verändert, so dass sich Falten auf der Begrenzungsplane bilden.

Die Erfindung hat den Vorteil, einen Nutzfahrzeugaufbau anbieten zu können, der sowohl mit einem höhenverstellbaren Dach als auch mit einer anderen Befestigungsart der Planenspanner zur XL-Fähigkeit, insbesondere einer Bordwand, ausgestattet ist, um den Anforderungen der Kunden gerecht zu werden. Bisher kann die XL-Fähigkeit der Nutzfahrzeugaufbauten mit einem höhenverstellbaren Dach nur derart ermöglicht werden, in dem die Planenspanner zur Straffung der Begrenzungsplanen mit dem Außenrahmen verbunden sind. Der Außenrahmen weist in der Regel eine flache Form auf und bildet eine Einheit, die fest mit dem Fahrgestell des Planensattelaufliegers verbunden ist. Die Verwendung einer Bordwand anstatt eines Außenrahmens bringt den Vorteil der Flexibilität mit sich. Bordwände können einfach ein- und ausgebaut sowie im Schadensfall einzeln ersetzt werden. Ein weiterer Vorteil ist, dass Bordwände beim Beladen und Entladen des Ladeguts unabhängig voneinander seitlich aufgeklappt bzw. gekippt werden können. Des Weiteren kann die Höhe der Bordwände durch bestimmte Scharnier- und Aufsatzsysteme erhöht werden, das wiederum zu einer Gesamtstabilisierung des Nutzfahrzeugaufbaus führt.

Bevorzugte Ausführungsformen der Erfindung sind den Unteransprüchen angegeben.

Vorzugsweise weist die Bordwand eine nach innen versetzte Vertiefung auf, die wenigstens der Höhe der Verankerungsanordnung entspricht. Das hat den Vorteil, dass die Verankerungsanordnung nicht seitlich aus der Bordwand herausragt, so dass die Begrenzungsplane beim Verschließen an der Bordwand anliegt.

Die Verankerungsanordnung umfasst vorzugsweise nebeneinander angeordnete Krampen. Die Krampen dienen dazu, ein zollsicheres Verschließen des Nutzfahrzeugaufbaus mit einem Zollseil zu ermöglichen.

In einer bevorzugten Ausführungsform sind die Krampen in der Vertiefung und zwischen den beiden axialen Enden der Bordwand angeordnet. Das hat den Vorteil, dass die Krampen innerhalb der Bordwand angeordnet sind und nicht seitlich aus ihr herausragen, so dass die Begrenzungsplane und die Bordwand in einer Ebene liegen.

In einer weiteren bevorzugten Ausführungsform ist das Zollseil durch die Krampen geführt. Das ermöglicht ein zollsicheres Verschließen des Nutzfahrzeugaufbaus bzw. der Begrenzungsplane.

In einer bevorzugten Ausführungsform ist die Einhakleiste in der Vertiefung und zwischen den beiden axialen Enden der Bordwand angeordnet. Das hat den Vorteil, dass die Einhakleiste nicht seitlich aus der Bordwand herausragt und die Begrenzungsplane im gespannten Zustand an der Bordwand anliegt.

Vorzugsweise weist die Einhakleiste im Querschnitt ein Z-förmiges Profil auf. Das hat den Vorteil, dass die Planenspanner mit der Einhakleiste formschlüssig im Eingriff stehen und somit die Begrenzungsplanen straff spannen können.

In einer nicht beanspruchten Ausführungsform des Nutzfahrzeugaufbaus sind wenigstens 3, insbesondere wenigstens 4, vorzugsweise 5, Aussparungen vorgesehen. Dabei entsprechen die Aussparungen dem Verstellweg des höhenverstellbaren Dachs. Eine Anzahl von mehr als einer Aussparung ermöglicht es, den Verstellweg des höhenverstellbaren Dachs zu vergrößern. Die Höhe der einzelnen Aussparungen kann hingegen reduziert werden.

Die Gesamthöhe der Aussparungen ist vorzugsweise derart bemessen, dass die Begrenzungsplane vertikal gespannt ist, wenn sich das höhenverstellbare Dach in der maximalen Ausfahrposition befindet. Beim Absenken des höhenverstellbaren Dachs rafft sich die Begrenzungsplane, zumindest in den Bereichen der Seitenkanten. Dabei bilden sich Falten, die jedoch aufgrund der relativ niedrigen Höhe der Aussparungen einen kleinen Überlappungsgrad aufweisen.

Vorzugsweise sind die Aussparungen in einer unteren Hälfte, insbesondere in einem unteren Drittel, der Begrenzungsplane angeordnet. So wird vermieden, dass die im abgesenkten Zustand des Daches gebildeten Falten das optische Erscheinungsbild einer Beschriftungsfläche der Begrenzungsplane beeinträchtigen.

Vorzugsweise sind Ösen im Bereich einer unteren Kante der Begrenzungsplane angeordnet. Die Ösen dienen dazu, die Durchführung der Krampen zu ermöglichen, die fest mit der Bordwand verbunden sind.

Im Rahmen der vorliegenden Anmeldung wird außerdem ein Nutzfahrzeug, insbesondere ein Planensattelauflieger, mit einem zuvor beschriebenen Nutzfahrzeugaufbau beansprucht.

Die Erfindung wird im Folgenden anhand eines Ausführungsbeispiels unter Bezugnahme auf die beigefügten, schematischen Zeichnungen näher erläutert. Darin zeigen:
- Figur 1: eine perspektivische Ansicht einer Bordwand nach einem erfindungsgemäßen Ausführungsbeispiel; und
- Figur 2: eine Begrenzungsplane mit einer Bordwand nach einem erfindungsgemäßen Ausführungsbeispiel.

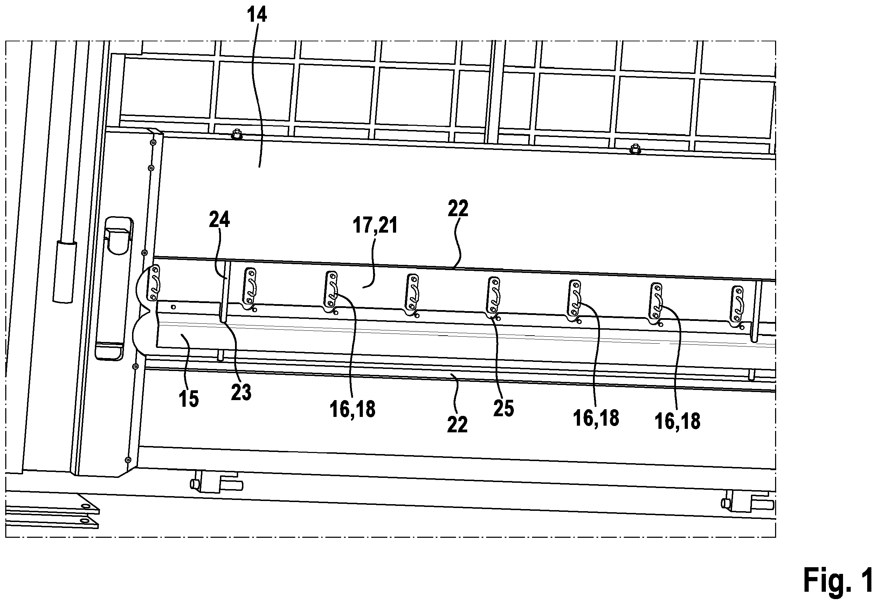

In Figur 1 ist eine perspektivische Ansicht einer Bordwand 14 nach einem erfindungsgemäßen Ausführungsbeispiel dargestellt.

Die Bordwand 14 weist eine rechteckige Form auf und erstreckt sich über die gesamte Länge der Begrenzungsplane 10. Die Bordwand 14 wird im Nutzfahrzeugaufbau zur Begrenzung einer Ladefläche und zur Ladungssicherung eingesetzt. Die Bordwand 14 ist flexibel und robust. Die Bordwand 14 kann als ein einzelnes Element einfach ein- und ausgebaut sowie im Schadensfall ersetzt werden. Die Bordwand 14 kann seitlich aufgeklappt bzw. gekippt werden, so dass sich der Belade- und Entladevorgang des Transportguts vereinfacht. Durch Scharnier- und Aufsatzsysteme kann die Höhe der Bordwand 14 erhöht werden, dass wiederum die Stabilität des Nutzfahrzeugaufbaus insgesamt erhöht.

Die Bordwand 14 weist eine Vertiefung 17 auf, die sich zwischen den beiden axialen Enden der Bordwand 14 erstreckt. Die Vertiefung 17 ist mittig in der Bordwand 14 angeordnet und parallel zu den vertikalen Enden der Bordwand 14 ausgerichtet. Die Vertiefung 17 ist nach innen versetzt angeordnet. Sie weist eine kantige, insbesondere rechteckige, Geometrie auf. Die Vertiefung 17 ist als Solches in die Bordwand 14 eingeschweißt oder wird durch Tiefziehen hergestellt. Die Vertiefung 17 umfasst einen Boden 21 sowie zwei Außenseiten 22, die sich längs über die gesamte Bordwand 14 erstrecken. Nach außen hin ist die Vertiefung 17 offen, so dass eine Verankerungsanordnung 16 in ihr angeordnet werden kann.

Die Verankerungsanordnung 16 umfasst insbesondere nebeneinander angeordnete Krampen 18, die regelmäßig zueinander beabstandet und zwischen den beiden axialen Enden der Bordwand 14 angeordnet sind. Die Höhe der Vertiefung 17 entspricht dabei wenigstens der Höhe der Verankerungsanordnung 16, so dass die Verankerungsanordnung 16 nicht aus der Vertiefung 17 herausragen kann. Die Krampen 18 weisen ein hakenförmiges, insbesondere ein U-förmiges, Profil auf und sind fest mit der Bordwand 14 bzw. mit dem Boden 21 der Vertiefung 17 verbunden, insbesondere verschraubt. Die Krampen 18 können mit der Bordwand 14 verschweißt oder vernietet sein. Die Krampen 18 dienen dazu, die Durchführung eines Zollseils 13, insbesondere eines Drahtseils, zum zollsicheren Verschließen der Begrenzungsplane 10 bzw. des Nutzfahrzeugaufbaus zu ermöglichen.

Die Bordwand 14 weist ferner eine Einhakleiste 15 auf, die ebenfalls in der Vertiefung 17 und zwischen den beiden axialen Enden der Bordwand 14 sowie unterhalb der Verankerungsanordnung 16 angeordnet ist. Die Einhakleiste 15 ist fest mit der Bordwand 14 verbunden, insbesondere verschraubt, und weist im Querschnitt ein Z-förmiges Profil auf, so dass mehrere Planenspanner 12 mit der Einhakleiste 15 formschlüssig im Eingriff stehen können. Ferner weist die Einhakleiste 15 mehrere Öffnungen 23 auf, die senkrecht zur Längsrichtung der Einhakleiste 15 angeordnet sind. Die Öffnungen 23 ermöglichen die Durchführung von beispielsweise Stangen 24, die zur Fixierung und Stabilisierung der Bordwand 14 dienen. Um die Befestigung der Krampen 18 mit der Bordwand 14 zu vereinfachen, weist die Einhakleiste 15 unter jede Krampe 18 jeweils eine Aussparung 25 auf.

Des Weiteren weist die Bordwand 14 an ihren Kanten Scharniersysteme auf, die ein Kippen bzw. ein Auf- und Zuklappen der Bordwand 14 während des Beladens und Entladens ermöglichen. Ferner umfasst die Bordwand 14 bestimmte Klippsysteme, die es ermöglichen einzelne Bordwände 14 rechtwinklig zueinander oder übereinander anzuordnen, um die Ladefläche kastenförmig umrahmen zu können. Die Bordwand 14 kann im Schadensfall einzeln ersetzt werden. Die Klippsysteme ermöglichen eine Erhöhung der Bordwand 14 insgesamt, das wiederum eine Gesamtstabilisierung des Nutzfahrzeugaufbaus zur Folge hat.

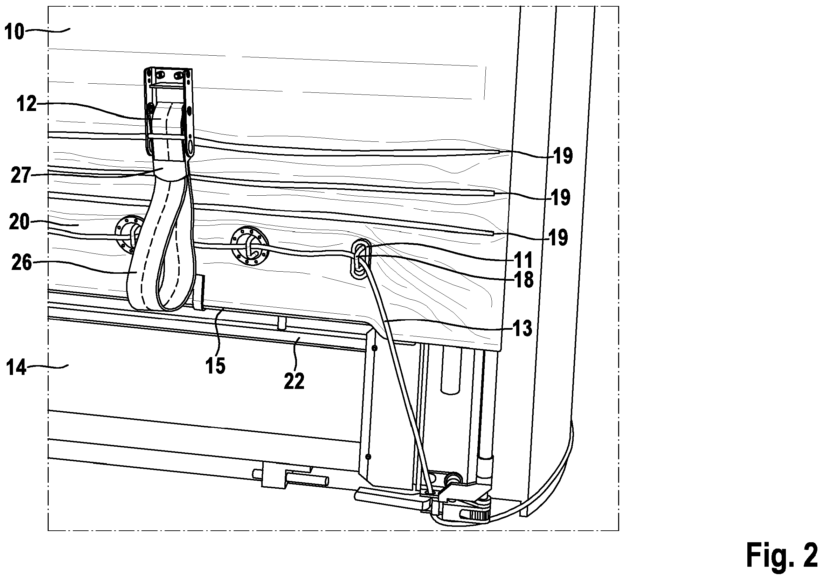

Figur 2 zeigt eine Begrenzungsplane 10 für einen Nutzfahrzeugaufbau, insbesondere für einen Planensattelauflieger, mit der Bordwand 14 im eingebauten Zustand. Die Begrenzungsplane 10 weist eine untere Kante 20 auf, entlang dieser mehrere Ösen 11 verteilt angeordnet sind. Die Ösen 11 dienen dazu, die Durchführung der Krampen 18 zu ermöglichen, die in der Vertiefung 17 angeordnet und fest mit der Bordwand 14 verbunden sind.

Ferner umfasst die Begrenzungsplane 10 drei Aussparungen 19, die von der unteren Kante 20 beabstandet angeordnet sind. Die Begrenzungsplane 10 kann wenigstens zwei, insbesondere wenigstens drei, insbesondere wenigstens vier, vorzugsweise fünf Aussparungen 19 aufweisen. Die Aussparungen 19 weisen im Wesentlichen eine U-förmige Kontur auf und sind regelmäßig zueinander angeordnet. Vorzugsweise sind die Aussparungen 19 in einer unteren Hälfte, insbesondere in einem unterem Drittel der Begrenzungsplane 10 vorgesehen.

Die Begrenzungsplane 10 kann an ihrer oberen Kante mit nicht dargestellten Planenlaufrollen verbunden sein, die in einer Rollenführung entlang des Dachholms des Nutzfahrzeugaufbaus verschiebbar sind. Zur Straffung der Begrenzungsplane 10 bzw. XL-Fähigkeit des Nutzfahrzeugaufbaus weist die Begrenzungsplane 10 im Bereich der unteren Kante 20 mehrere Planenspanner 12 auf. Die Planenspanner 12 sind einerseits mit der Begrenzungsplane 10 und andererseits mit der Einhakleiste 15, die in der Vertiefung 17 der Bordwand 14 angeordnet ist, verbunden.

Die Gesamthöhe der Aussparungen 19 entspricht dem Verstellweg des höhenverstellbaren Dachs des Nutzfahrzeugaufbaus. Dabei verändert sich der Abstand der Aussparungen 19 während der Höhenverstellung des Dachs, so dass sich Falten auf der Begrenzungsplane 10 bilden. Auf diese Weise kann sich die Begrenzungsplane 10 an die Höhenverstellung des Dachs anpassen. Die Anzahl und die Höhe der Aussparungen 19 sind frei wählbar und sind insbesondere an den gewünschten Verstellweg des Dachs angepasst. Um einen größeren Verstellweg zu kompensieren, ist es erforderlich, die Anzahl der Aussparungen 19 zu erhöhen. Die Planenspanner 12 sind einerseits mit der Begrenzungsplane 10 und anderseits mit der Einhakleiste 15 verbunden, um die Begrenzungsplane 10 während der Höhenverstellung des Dachs straff zu spannen bzw. die XL-Fähigkeit des Nutzfahrzeugaufbaus zu ermöglichen. Die Planenspanner 12 weisen einen Verschluss 27 auf, der vor Höhenverstellung des Dachs manuell geöffnet wird, so dass sich die Schlaufen 26 der Planenspanner 12 verlängern und an den Verstellweg anpassen können. Nach der Höhenverstellung wird der Verschluss 27 wieder manuell geschlossen, um die Begrenzungsplane 10 in der gewünschten Position zu fixieren bzw. straff zu spannen.

### Bezugszeichenliste

- 10: Begrenzungsplane
- 11: Ösen
- 12: Planenspanner
- 13: Zollseil
- 14: Bordwand
- 15: Einhakleiste
- 16: Verankerungsanordnung
- 17: Vertiefung
- 18: Krampen
- 19: Aussparungen
- 20: Untere Kante
- 21: Boden
- 22: Außenseiten
- 23: Öffnungen
- 24: Stangen
- 25: Aussparung
- 26: Schlaufen
- 27: Verschluss

## Patentansprüche

1. Nutzfahrzeugaufbau für ein Nutzfahrzeug, insbesondere für einen Planensattelauflieger, umfassend
- ein höhenverstellbares Dach,
- eine Begrenzungsplane (10) mit mehreren Ösen (11) und mehreren Planenspannern (12) zur vertikalen Spannung der Begrenzungsplane (10),
- ein Zollseil (13) zum zollsicheren Verschließen der Begrenzungsplane (10) und
- ein Befestigungsmittel zur Befestigung der Begrenzungsplane (10), wobei
das Befestigungsmittel wenigstens eine Bordwand (14) umfasst, die eine Einhakleiste (15) zur Befestigung der Planenspanner (12) und eine Verankerungsanordnung (16) für das Zollseil (13) aufweist
**dadurch gekennzeichnet, dass**
die Begrenzungsplane (10) wenigstens zwei Aussparungen (19) aufweist, wobei die Aussparungen (19) eine Gesamthöhe aufweisen, die einem Verstellweg des höhenverstellbaren Dachs entspricht, wobei die Aussparungen (19) im Wesentlichen eine U-förmige Kontur aufweisen und regelmäßig zueinander angeordnet sind und wobei sich der Abstand der Aussparungen (19) während der Höhenverstellung des Dachs verändert, so dass sich Falten auf der Begrenzungsplane (10) bilden.

2. Nutzfahrzeugaufbau nach Anspruch 1,
**dadurch gekennzeichnet, dass**
die Bordwand (14) eine nach innen versetzte Vertiefung (17) aufweist, die wenigstens der Höhe der Verankerungsanordnung (16) entspricht.

3. Nutzfahrzeugaufbau nach Anspruch 1 oder 2,
**dadurch gekennzeichnet, dass**
die Verankerungsanordnung (16) nebeneinander angeordnete Krampen (18) umfasst.

4. Nutzfahrzeugaufbau nach Anspruch 3,
**dadurch gekennzeichnet, dass**
die Krampen (18) in der Vertiefung (17) und zwischen den beiden axialen Enden der Bordwand (14) angeordnet ist.

5. Nutzfahrzeugaufbau nach einem Ansprüche 3 oder 4,
**dadurch gekennzeichnet, dass**
das Zollseil (13) durch die Krampen (18) geführt ist.

6. Nutzfahrzeugaufbau nach einem der Ansprüche 2 bis 5,
**dadurch gekennzeichnet, dass**
die Einhakleiste (15) in der Vertiefung (17) und zwischen den beiden Enden der Bordwand (14) angeordnet ist.

7. Nutzfahrzeugaufbau nach einem der vorhergehenden Ansprüche,
**dadurch gekennzeichnet, dass**
die Einhakleiste (15) im Querschnitt ein Z-förmiges Profil aufweist, in das die Planenspanner (12) eingreifen.

8. Nutzfahrzeugaufbau nach einem der vorhergehenden Ansprüche,
**dadurch gekennzeichnet, dass**
die Aussparungen (19) in einer unteren Hälfte, insbesondere in einem unteren Drittel der Begrenzungsplane (10) vorgesehen sind.

9. Nutzfahrzeugaufbau nach einem der vorhergehenden Ansprüche,
**dadurch gekennzeichnet, dass**
die Ösen (11) im Bereich einer unteren Kante (20) der Begrenzungsplane (10) angeordnet sind.

10. Nutzfahrzeug, insbesondere Planensattelauflieger, mit einem Nutzfahrzeugaufbau nach einem der vorhergehenden Ansprüche.

## Claims

1. A commercial vehicle structure for a commercial vehicle, in particular for a tarpaulin semi-trailer, comprising
- a height-adjustable roof,
- a delimiting tarpaulin (10) having multiple eyelets (11) and multiple tarpaulin tensioners (12) for vertically tensioning the delimiting tarpaulin (10),
- a customs-approved rope (13) for closing the delimiting tarpaulin (10) according to customs regulations, and
- a fastening means for fastening the delimiting tarpaulin (10), wherein
the fastening means comprises at least one board wall (14), which has a hook-in strip (15) for fastening the tarpaulin tensioners (12) and an anchoring arrangement (16) for the customs-approved rope (13),
**characterised in that**
the delimiting tarpaulin (10) has at least two cut-outs (19), wherein the cut-outs (19) have a total height which corresponds to an adjustment distance of the height-adjustable roof, wherein the cut-outs (19) have a substantially U-shaped contour and are arranged at regular intervals from each other, and wherein the spacing of the cut-outs (19) changes during height adjustment of the roof, so that folds form in the delimiting tarpaulin (10).

2. The commercial vehicle structure according to Claim 1,
**characterised in that**
the board wall (14) has an inwardly recessed depression (17), which corresponds at least to the height of the anchoring arrangement (16).

3. The commercial vehicle structure according to Claim 1 or 2,
**characterised in that**
the anchoring arrangement (16) comprises staples (18) arranged next to each other.

4. The commercial vehicle structure according to Claim 3,
**characterised in that**
the staples (18) are arranged in the depression (17) and between the two axial ends of the board wall (14).

5. The commercial vehicle structure according to one of Claims 3 or 4,
**characterised in that**
the customs-approved rope (13) is guided through the staples (18).

6. The commercial vehicle body according to any one of Claims 2 to 5,
**characterised in that**
the hook-in strip (15) is arranged in the depression (17) and between the two ends of the board wall (14).

7. The commercial vehicle structure according to any one of the preceding claims,
**characterised in that**
the hook-in strip (15) has a Z-shaped profile in cross-section, into which the tarpaulin tensioners (12) engage.

8. The commercial vehicle structure according to any one of the preceding claims,
**characterised in that**
the cut-outs (19) are provided in a lower half, in particular in a lower third, of the delimiting tarpaulin (10) .

9. The commercial vehicle structure according to any one of the preceding claims,
**characterised in that**
the eyelets (11) are arranged in the region of a lower edge (20) of the delimiting tarpaulin (10).

10. A commercial vehicle, in particular a tarpaulin semi-trailer, having a commercial vehicle structure according to any one of the preceding claims.

## Revendications

1. Carrosserie de véhicule utilitaire, destinée à un véhicule utilitaire, notamment à un camion semi-remorque bâché, comprenant
- un toit réglable en hauteur,
- une bâche de délimitation (10) pourvue de plusieurs œillets (11) et de plusieurs tendeurs de bâche (12), pour la mise en tension verticale de la bâche de délimitation (10),
- un câble de douane (13) pour la fermeture garantie selon les règles douanières de la bâche de délimitation (10) et
- un moyen de fixation, pour la fixation de la bâche de délimitation (10),
le moyen de fixation comprenant au moins une ridelle (14), qui comporte une barrette d'accrochage (15) pour la fixation des tendeurs de bâche (12) et un ensemble d'ancrage (16) pour le câble de douane (13),
**caractérisée en ce que**
la bâche de délimitation (10) comporte au moins deux évidements (19), les évidements (19) présentant une hauteur totale qui correspond à une course d'ajustage du toit réglable en hauteur, les évidements (19) présentant un contour sensiblement en forme de U et étant placés de manière régulière l'un par rapport à l'autre, et l'écart entre les évidements (19) variant pendant le réglage en hauteur du toit, de sorte à créer des plis sur la bâche de délimitation (10).

2. Carrosserie de véhicule utilitaire selon la revendication 1,
**caractérisée en ce que**
la ridelle (14) comporte un creux (17) décalé vers l'intérieur, qui correspond au moins à la hauteur de l'ensemble d'ancrage (16).

3. Carrosserie de véhicule utilitaire selon la revendication 1 ou 2,
**caractérisée en ce que**
l'ensemble d'ancrage (16) comprend des crampons (18) placés côte à côte.

4. Carrosserie de véhicule utilitaire selon la revendication 3,
**caractérisée en ce que**
les crampons (18) sont placés dans le creux (17) et entre les deux extrémités axiales de la ridelle (14).

5. Carrosserie de véhicule utilitaire selon l'une quelconque des revendications 3 ou 4,
**caractérisée en ce que**
le câble de douane (13) est guidé à travers les crampons (18).

6. Carrosserie de véhicule utilitaire selon l'une quelconque des revendications 2 à 5,
**caractérisée en ce que**
la barrette d'accrochage (15) est placée dans le creux (17) et entre les deux extrémités du hayon (14).

7. Carrosserie de véhicule utilitaire selon l'une quelconque des revendications précédentes,
**caractérisée en ce que**
dans la section transversale, la barrette d'accrochage (15) comporte un profil en forme de Z, dans lequel s'engagent les tendeurs de bâche (12).

8. Carrosserie de véhicule utilitaire selon l'une quelconque des revendications précédentes,
**caractérisée en ce que**
les évidements (19) sont prévus dans une moitié inférieure, notamment dans un tiers inférieur de la bâche de délimitation (10).

9. Carrosserie de véhicule utilitaire selon l'une quelconque des revendications précédentes,
**caractérisée en ce que**
les œillets (11) sont placés dans la zone d'une arête inférieure (20) de la bâche de délimitation (10).

10. Véhicule utilitaire, notamment camion semi-remorque bâché, pourvu d'une carrosserie de véhicule utilitaire selon l'une quelconque des revendications précédentes.
